# EUROPEAN PATENT APPLICATION

(11) **EP 4 474 586 A1**
(43) Date of publication of application: **11.12.2024**
(21) Application number: 23749833.2
(22) Date of filing: 02.02.2023
(51) Int. Cl.: E04B 1/00, E04B 1/62, B41M 5/42, B32B 7/06, B32B 33/00

(54) **TRANSFER FILM, WATER REPELLENT/OIL REPELLENT EXTERIOR MATERIAL, AND METHOD FOR MANUFACTURING SAME**

(30) Priority: 03.02.2022 JP 2022015938
(71) Applicant: Dai Nippon Printing Co., Ltd., Tokyo 162-8001 (JP)
(72) Inventor: MIYAZAKI, Saori, Tokyo 162-8001 (JP); AKITA, Yasuhiro, Tokyo 162-8001 (JP); NAKAMURA, Katsuji, Tokyo 162-8001 (JP)
(74) Representative: Müller-Boré & Partner Patentanwälte PartG mbB
(86) International application number: PCT/JP2023/003452
(87) International publication number: WO 2023/149517

(57) **Abstract**

A transfer film for exterior materials which includes a release film and a transfer layer. The transfer layer includes a surface protection layer. The surface protection layer constitutes a surface layer of the transfer layer which faces the release film. The content of silicon atoms in the surface of the surface protection layer which faces the release film, the content being determined by X-ray photoelectron spectroscopy, is 3 atomic% or more and 30 atomic% or less.

## Description

### Technical Field

The present disclosure relates to a transfer film, a water- and oil-repellent exterior material, and a method for producing the water- and oil-repellent exterior material.

### Background Art

A surface protection layer has been formed on the surface of a molded body in order to impart scratch resistance and the like to the molded body. The surface protection layer is formed by, for example, performing coating or using a transfer film (see, e.g., PTL 1).

### Citation List

### Patent Literature

PTL 1: Japanese Unexamined Patent Application Publication No. 2004-345228

### Summary of Invention

### Technical Problem

Exterior materials for outdoor use are desirably excellent in terms of water- and oil-repellency since they may be subjected to severe weatherproof conditions. The inventors of the present disclosure studied an approach to enhancing the water- and oil-repellency of an exterior material with a transfer film that has a transfer layer including a surface protection layer by transferring the transfer layer to the exterior material. However, the inventors of the present disclosure found that, in the case where a surface protection layer is formed on an exterior material using the transfer film, the surface protection layer transferred on the exterior material does not have sufficiently high water- and oil-repellency.

An object of the present disclosure is to provide a transfer film with which a transfer layer having a surface protection layer having excellent water- and oil-repellency can be transferred to a target material, which is an exterior material.

### Solution to Problem

In one embodiment, a transfer film according to the present disclosure is a transfer film for exterior materials, the transfer film including a release film and a transfer layer, the transfer layer including a surface protection layer, the surface protection layer constituting a surface layer of the transfer layer, the surface layer facing the release film, wherein a content of silicon atoms in a surface of the surface protection layer, the surface facing the release film, the content being determined by X-ray photoelectron spectroscopy, is 3 atomic% or more and 30 atomic% or less.

### Advantageous Effects of Invention

According to the present disclosure, a transfer film with which a transfer layer having a surface protection layer having excellent water- and oil-repellency can be transferred to a target material, which is an exterior material, can be provided.

### Brief Description of Drawings

[Fig. 1] Fig. 1 is a schematic cross-sectional view of a transfer film according to an embodiment of the present disclosure.
[Fig. 2] Fig. 2 is a schematic cross-sectional view of a transfer film according to an embodiment of the present disclosure.
[Fig. 3] Fig. 3 is a schematic cross-sectional view of a water- and oil-repellent exterior material according to an embodiment of the present disclosure.

### Description of Embodiments

Details of transfer film, etc. according to embodiments of the present disclosure are described below. The transfer film, etc. according to the present disclosure can be implemented in a variety of different ways and should not be interpreted as being limited to the description of the exemplary embodiments below. In the attached drawings, each layer may be illustrated schematically in terms of width, thickness, shape, etc. compared with the embodiments for the sake of clarity of description. However, they are merely illustrative and do not limit the interpretation of the transfer film, etc. according to the present disclosure. In the description and the attached drawings, elements similar to those that have been described with reference to the drawings are denoted with the same reference numerals as in the drawings, and detailed description thereof may be omitted as needed.

In the present disclosure, in the case where there are a variety of choices on the upper and lower limits of a parameter, the numerical range of the parameter may be defined by a combination of one of the choices of the upper limit and one of the choices of the lower limit. Examples of such a parameter include a physical property, the content of a component, and the thickness of a layer. For example, the expression "The parameter B is preferably A1 or more, is more preferably A2 or more, and is further preferably A3 or more. The parameter B is preferably A4 or less, is more preferably A5 or less, and is further preferably A6 or less" is explained below. In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

As for each of the components described below (e.g., resin materials, curable resins, particles, additives, weather resistance improvers, silicone compounds, adhesive resins, and organic solvents), only one material may be used alone, or two or more materials may be used in combination.

The transfer film according to the present disclosure includes a release film and a transfer layer. The transfer layer is removably disposed on the release film. The transfer layer includes a surface protection layer. In one embodiment, the transfer layer includes a surface protection layer and an adhesive layer arranged in the thickness direction in order from the release film. The surface protection layer constitutes a surface layer of the transfer layer which faces the release film.

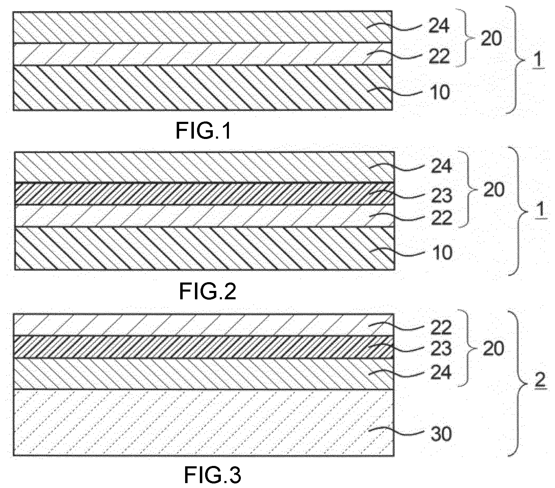

Figs. 1 and 2 illustrate transfer films according to embodiments of the present disclosure.

The transfer film 1 illustrated in Fig. 1 includes a release film 10 and a transfer layer 20 removably disposed on the release film 10. The transfer layer 20 includes a surface protection layer 22 and an adhesive layer 24 arranged in the thickness direction in order from the release film 10. In other words, the release film 10, the surface protection layer 22, and the adhesive layer 24 are stacked on top of one another in the thickness direction, which is the vertical direction of Fig. 1.

The transfer layer 20 included in the transfer film 1 illustrated in Fig. 2 includes a surface protection layer 22, an adhesive layer 24, and a primer layer 23 interposed therebetween. The transfer layer 20 includes the surface protection layer 22, the primer layer 23, and the adhesive layer 24 arranged in the thickness direction in order from the release film 10. In other words, the release film 10, the surface protection layer 22, the primer layer 23, and the adhesive layer 24 are stacked on top of one another in the thickness direction, which is the vertical direction of Fig. 2.

The transfer layer included in the transfer film according to the present disclosure may further include a layer other than any of the surface protection layer, the primer layer, and the adhesive layer. The other layer can be appropriately selected from the layers known in the related art, such as a design layer.

In a transfer film according to a first aspect of the present disclosure, the content of silicon atoms in the surface of the surface protection layer which faces the release film is 3 atomic% or more and 30 atomic% or less. The content of the silicon atoms is determined by X-ray photoelectron spectroscopy (XPS). The use of a transfer film that satisfies the above requirement imparts, for example, suitable water- and oil-repellency to an exterior material.

The content of the silicon atoms is preferably 5 atomic% or more, is more preferably 7 atomic% or more, is further preferably 10 atomic% or more, and is particularly preferably 15 atomic% or more. The content of the silicon atoms may be 25 atomic% or less and may be 23 atomic% or less. When the content of the silicon atoms is equal to or more than the above lower limit, for example, water- and/or oil-repellency can be further enhanced.

The content of silicon atoms in the release film-side surface of the surface protection layer is determined by removing the release film of the transfer film to expose a surface of the surface protection layer and analyzing the surface by X-ray photoelectron spectroscopy (XPS). The analysis of the release film-side surface of the surface protection layer is conducted by, for example, transferring the transfer layer of the transfer film to a target material to prepare a specimen and analyzing the surface of the surface protection layer included in the specimen. XPS is an analysis method with which atoms included in a region of the surface of a sample which extends about several nanometers in the depth direction can be detected. Thus, atoms included in the surface of the surface protection layer can be detected by XPS.

The device used in XPS and the measurement conditions are as follows.
Device: PHI 5000 VersaProbe III
(produced by ULVAC-PHI, Inc., scanning X-ray photoelectron spectroscopy)
Analysis method: Narrow analysis
Measurement conditions: X-ray source: Al-Kα radiation (1.49 keV)
X-ray irradiation diameter: 200 µm
X-ray power: 50 W (acceleration voltage: 15 kV,
   emission current: 3.3 mA)
Photoelectron incident angle: 45°
Measurement region: 600 µm × 200 µm

The measurement is conducted under the above conditions.

On the basis of the measurement results obtained by XPS, the area of a peak derived from silicon atoms is determined. Moreover, the total area of peaks derived from the other elements (e.g., carbon atoms) is calculated. The content of silicon atoms is calculated using the formula below. The above measurement is conducted five times, and the average thereof is considered the content of silicon atoms. Content of silicon atoms (atomic%) = {(Area of peak derived from silicon atoms)/((Area of peak derived from silicon atoms) + (Total area of peaks derived from the other elements))} × 100

In one embodiment, in the case where the elements that are to be analyzed by XPS are following four elements: silicon, oxygen, carbon, and nitrogen atoms, the content of silicon atoms is the ratio of the number of silicon atoms to the total number of carbon, oxygen, nitrogen, and silicon atoms.

The content of silicon atoms in the surface of a specimen prepared by transferring the transfer layer of the transfer film according to the first aspect of the present disclosure to a target material, the specimen having been subjected to a weathering test under the conditions described below, the surface in which the surface protection layer is located, is preferably 2.5 atomic% or more and 30 atomic% or less. The content of silicon atoms is determined by XPS as described above. When the transfer layer of the transfer film that satisfies the above requirement is transferred on an exterior material, the water- and oil-repellency of the surface of the surface protection layer can be maintained in a suitable manner even after the exterior material has been subjected to sever conditions outdoors.

### <Weathering Test>

The specimen is subjected to an accelerated weathering test with a metal halide lamp (MWOM) using a tester "Metal Weather" (produced by DAIPLA WINTES Co., Ltd.). Details of the tester and test conditions are described in Examples below. The surface protection layer of the specimen is irradiated with ultraviolet radiation for 20 hours under the irradiation conditions below. Subsequently, water is sprayed (i.e., showered) on the specimen for 30 seconds. Then, condensation is caused for 4 hours under the condensation condition below. The above steps are considered one cycle. Note that one cycle = 24 hours. The above steps are repeated for 12.5 cycles.
«Irradiation Conditions»
   Illuminance: 100 mW/cm²,
   Black panel temperature: 63°C, Humidity: 50%RH
<<Condensation Condition>>
   Humidity: 98%RH

The content of silicon atoms in the surface protection layer-side surface which is determined subsequent to the weathering test is preferably 3 atomic% or more, is more preferably 4 atomic% or more, is further preferably 5 atomic% or more, and is particularly preferably 10 atomic% or more; and may be 25 atomic% or less or 20 atomic% or less. When the content of the silicon atoms is equal to or more than the above lower limit, for example, water- and/or oil-repellency can be further enhanced.

The value calculated by subtracting the content of silicon atoms in the surface protection layer-side surface which is determined subsequent to the weathering test from the content of silicon atoms in the surface protection layer-side surface which is determined prior to the weathering test is preferably 10 atomic% or less, is more preferably 8 atomic% or less, is further preferably 5 atomic% or less, and is particularly preferably 3 atomic% or less.

The transfer film according to the first aspect of the present disclosure may further satisfy the requirement regarding surface free energy which a transfer film according to the second aspect described below satisfies and/or the requirement regarding water contact angle which a transfer film according to the third aspect described below satisfies.

In a transfer film according to a second aspect of the present disclosure, the surface free energy of the release film-side surface of the surface protection layer is 20 mJ/m² or more and 40 mJ/m² or less. The use of a transfer film that satisfies the above requirement imparts, for example, suitable water- and oil-repellency to an exterior material.

The above surface free energy is preferably 38 mJ/m² or less, is more preferably 35 mJ/m² or less, is further preferably 30 mJ/m² or less, and is particularly preferably 28 mJ/m² or less. The above surface free energy may be 21 mJ/m² or more or 22 mJ/m² or more. When the above surface free energy is equal to or less than the above upper limit, for example, water- and/or oil-repellency can be further enhanced.

The surface free energy of the release film-side surface of the surface protection layer is determined by removing the release film of the transfer film to expose a surface of the surface protection layer and analyzing the surface by the method described below.

In the present disclosure, the surface free energy of the surface protection layer is determined by measuring the contact angles of various types of droplets on the surface of the surface protection layer (measured at a temperature of 25°C and a relative humidity of 50%) and performing a calculation using the Wu's method on the basis of the above contact angles.

Specifically, droplets of diiodomethane are used to determine "dispersive part", while droplets of pure water are used to determine "polar part". The contact angles of diiodomethane and pure water are measured using a contact angle meter in accordance with a sessile drop method conforming to JIS R 3257:1999 under the following conditions: temperature: 25°C, relative humidity: 50%, droplet amount: 2.0 µL. In the measurement of contact angle, the static contact angle of a droplet is measured with the contact angle meter in accordance with a half-angle method after 1 second since the landing of the droplet. On the basis of the above contact angles, the surface free energy values of the dispersive and polar parts are determined. The surface free energy (mJ/m²) of the surface of the surface protection layer is calculated on the basis of the sum total of the surface free energy values using the formula of the Wu's method. The above measurement is conducted five times, and the average thereof is considered the surface free energy. Note that the above surface free energy values are determined using surface free energy analysis software.

The surface free energy of the surface of a specimen prepared by transferring the transfer layer of the transfer film according to the second aspect of the present disclosure to a target material, the specimen having been subjected to a weathering test under the conditions described above, the surface in which the surface protection layer is located, is preferably 20 mJ/m² or more and 40 mJ/m² or less. When the transfer layer of the transfer film that satisfies the above requirement is transferred on an exterior material, the water- and oil-repellency of the surface of the surface protection layer can be maintained in a suitable manner even after the exterior material has been subjected to sever conditions outdoors.

The surface free energy of the surface protection layer-side surface which is determined subsequent to the weathering test is preferably 38 mJ/m² or less, is more preferably 35 mJ/m² or less, is further preferably 30 mJ/m² or less, and is particularly preferably 28 mJ/m² or less. The surface free energy of the surface protection layer-side surface which is determined subsequent to the weathering test may be 21 mJ/m² or more or 22 mJ/m² or more. When the above surface free energy is equal to or less than the above upper limit, for example, water- and/or oil-repellency can be further enhanced.

The value calculated by subtracting the surface free energy of the surface protection layer-side surface which is determined prior to the weathering test from the surface free energy of the surface protection layer-side surface which is determined subsequent to the weathering test is preferably 8 mJ/m² or less, is more preferably 6 mJ/m² or less, is further preferably 3 mJ/m² or less, and is particularly preferably 1.5 mJ/m² or less.

The transfer film according to the second aspect of the present disclosure may further satisfy the requirement regarding the content of silicon atoms which the transfer film according to the first aspect satisfies and/or the requirement regarding water contact angle which a transfer film according to the third aspect described below satisfies.

In a transfer film according to a third aspect of the present disclosure, the water contact angle of the release film-side surface of the surface protection layer is 90° or more. The use of a transfer film that satisfies the above requirement imparts, for example, suitable water- and oil-repellency to an exterior material.

The above water contact angle is preferably 92° or more, is more preferably 95° or more, and is further preferably 98° or more. The above water contact angle may be 120° or less, 110° or less, or 105° or less.

The water contact angle of the release film-side surface of the surface protection layer is determined by removing the release film of the transfer film to expose a surface of the surface protection layer and analyzing the surface by the method described below.

The term "water contact angle" used in the present disclosure refers to a value determined in accordance with a sessile drop method confirming to JIS R 3257:1999. In the measurement of water contact angle, a water droplet of 2.0 µL is dropped onto the surface of the surface protection layer, and the static contact angle of the droplet is measured with a contact angle meter in accordance with a half-angle method after 1 second since the landing of the droplet. Specifically, the contact angle is determined by measuring the angle of a straight line that connects the left-right edge of the droplet to the vertex of the droplet with respect to the solid surface and multiplying the angle by two. The above measurement is conducted five times, and the average thereof is considered the contact angle. The measurement of contact angle is conducted in an atmosphere having a temperature of 25°C and a relative humidity of 50%. The water contact angle is measured after the measurement sample has been left to stand in the above atmosphere for 10 minutes or more.

The water contact angle of the surface of a specimen prepared by transferring the transfer layer of the transfer film according to the third aspect of the present disclosure to a target material, the specimen having been subjected to a weathering test under the conditions described above, the surface in which the surface protection layer is located, is preferably 85° or more. When the transfer layer of the transfer film that satisfies the above requirement is transferred on an exterior material, the water- and oil-repellency of the surface of the surface protection layer can be maintained in a suitable manner even after the exterior material has been subjected to sever conditions outdoors.

The water contact angle of the surface protection layer-side surface which is determined subsequent to the weathering test is preferably 90° or more, is more preferably 92° or more, is further preferably 95° or more, and is particularly preferably 98° or more. The water contact angle of the surface protection layer-side surface which is determined subsequent to the weathering test may be 120° or less, 110° or less, or 105° or less.

The value calculated by subtracting the water contact angle of the surface protection layer-side surface which is determined subsequent to the weathering test from the water contact angle of the surface protection layer-side surface which is determined prior to the weathering test is preferably 10° or less, is more preferably 8° or less, is further preferably 5° or less, and is particularly preferably 3° or less.

The transfer film according to the third aspect of the present disclosure may further satisfy the requirement regarding the content of silicon atoms which the transfer film according to the first aspect satisfies and/or the requirement regarding surface free energy which the transfer film according to the second aspect satisfies.

The transfer layer included in the transfer film according to the present disclosure is transferred to a target material, which is an exterior material, to serve as a surface protection film. The use of the transfer film according to the present disclosure imparts, for example, excellent water- and oil-repellency, that is, an antifouling property, to the exterior material. Furthermore, as needed, weather resistance, scratch resistance, and chemical resistance can be imparted. The transfer film according to the present disclosure can be suitably used for exterior materials for use in applications where the exterior materials are subjected to direct sunlight, wind, and rain and required to have high weather resistance.

With the transfer film according to the present disclosure, a transfer layer including a surface protection layer having excellent water- and oil-repellency can be transferred to an exterior material. This eliminates the need to subject the surface protection layer transferred on the exterior material to a treatment for enhancing water- and oil-repellency (e.g., application of a coating liquid for enhancing water- and oil-repellency) in subsequent steps and reduces the production costs and the like.

Using the transfer film according to the present disclosure enables a surface protection layer having excellent water- and oil-repellency to be readily formed on at least a part of the surface of an exterior material by a transfer process, which is an environmentally friendly process that does not involve the discharge of organic solvents.

Details of the structure of the transfer film according to the present disclosure are described below.

The transfer film according to the present disclosure includes a release film.

The surface free energy of the transfer layer-side surface of the release film is preferably 15 mJ/m² or more; and is preferably 35 mJ/m² or less, is more preferably 30 mJ/m² or less, and is further preferably 25 mJ/m² or less. The above surface free energy is, for example, 15 mJ/m² or more and 35 mJ/m² or less. In the measurement of the surface free energy of the release film, the surface of the release film which is exposed as a result of the release film being removed from the transfer layer of the transfer film (i.e., the surface on which the transfer layer was present) is analyzed.

It is preferable that, in the production of the transfer film, the surface free energy of the surface of the release film on which the surface protection layer is to be formed also fall within the above range. It is considered that, when a surface protection layer including a silicone compound is formed on a release film having the above-described surface free energy, at least a part of the silicone compound can be present on the release film-side surface of the surface protection layer as described below. Consequently, the content of silicon atoms in the transferred surface protection layer and the surface free energy and water contact angle of the transferred surface protection layer can be readily controlled to fall within the above ranges. This enhances, for example, the water- and oil-repellency of the transferred surface protection layer.

In one embodiment, the release film includes a substrate and a release layer which is disposed on the substrate and includes a silicone compound. In one embodiment, the release film is a substrate including a silicone compound. The above release films are likely to have a low surface free energy. In addition, for example, the releasability between the surface protection layer and the release film during transfer can be enhanced.

The substrate is, for example, a film composed of a resin material (hereinafter, this film is referred to also as "resin film"). Examples of the resin material include a polyester, a polyolefin, a polystyrene, a vinyl resin, a (meth)acrylic resin, a polyamide, a polyimide, and a polycarbonate. Note that the term "(meth)acrylic" used in the present disclosure refers to both "acrylic" and "methacrylic".

The substrate may also be, for example, a paper substrate composed of glassine paper, condenser paper, paraffin paper, or the like.

The resin film is preferably a polyester film or a polyolefin film. When the resin film is any of the above films, for example, the surface protection layer, etc. can be readily formed on the release film.

Examples of the polyester include polyethylene terephthalate (PET), polybutylene terephthalate (PBT), polyethylene naphthalate (PEN), and a polyethylene terephthalate-isophthalate copolymer. Among these, PET and PBT are preferable and PET is more preferable in order to reduce the occurrence of heat shrinkage in the production of the transfer film and shrinkage induced by ionizing radiation.

Examples of the polyolefin include polyethylene, polypropylene, polybutene, an ethylene-propylene copolymer, and an ethylene-propylene-butene copolymer. Among these, polypropylene is preferable in order to reduce the occurrence of heat shrinkage in the production of the transfer film and shrinkage induced by ionizing radiation.

The resin film may be either a stretched or unstretched film and is preferably a stretched film. The stretch ratio of the stretched film in the machine direction (MD) and/or the width direction (TD) is, for example, 5 or more and 30 or less. When the resin film is a stretched film, for example, the occurrence of the heat shrinkage of the resin film due to the heat treatment performed in the production of the transfer film and the shrinkage of the resin film due to the crosslinking treatment performed using ionizing radiation can be reduced and the dimensional stability of the transfer film can be enhanced consequently.

The stretched film may be a uniaxially or biaxially stretched film. The stretched film is preferably a biaxially stretched film in order to reduce the occurrence of heat shrinkage in the production of the transfer film and shrinkage induced by ionizing radiation.

The substrate may have a single-layer or multilayer structure. The substrate may be, for example, a single-layer body consisting of a resin film or a paper substrate, a multilayer body including a resin film, a multilayer body including a paper substrate, or a multilayer body including a resin film and a paper substrate. The multilayer body including a resin film can be prepared by, for example, using dry lamination, wet lamination, or extrusion.

The thickness of the substrate is preferably 5 µm or more and is more preferably 10 µm or more; and is preferably 200 µm or less and is more preferably 100 µm or less. The thickness of the substrate is, for example, 5 µm or more and 200 µm or less. In the case where the substrate has a multilayer structure, it is preferable that the overall thickness of the multilayer structure fall within the thickness range.

The release layer may be formed by subjecting the surface of the substrate to a release treatment using a release agent including a silicone compound. The release layer may be a resin layer including a silicone compound.

The silicone compound may be, for example, an addition silicone compound, a condensation silicone compound, an ultraviolet-cure silicone compound, or an electron beam-cure silicone compound. The silicone compound may also be a silicone compound that does not have curability. Examples of the silicone compound include a silicone oil and a silicone resin. Examples of the silicone oil include a dimethyl silicone oil, a methyl phenyl silicone oil, an alkyl-modified silicone oil, an aralkyl-modified silicone oil, a polyether-modified silicone oil, a higher fatty acid ester-modified silicone oil, and a higher fatty acid amide-modified silicone oil.

The surface free energy of the release layer-side surface of the release film is preferably 15 mJ/m² or more; is preferably 35 mJ/m² or less, is more preferably 30 mJ/m² or less, and is further preferably 25 mJ/m² or less; and is, for example, 15 mJ/m² or more and 35 mJ/m² or less.

The thickness of the release layer may be, for example, 0.01 µm or more, 0.02 µm or more, or 0.03 µm or more; may be, for example, 1 µm or less, 0.5 µm or less, or 0.3 µm or less; and may be, for example, 0.01 µm or more and 1 µm or less. The release layer can be formed using gravure coating, bar coating, knife coating, roll coating, blade coating, die coating, or the like.

The release film may be a release film that includes a PET film and a release layer that is disposed on the PET film and includes a silicone compound and may be a release film that includes a PET film and a silicone coating layer disposed on the PET film.

The transfer layer included in the transfer film according to the present disclosure includes a surface protection layer.

The surface protection layer is a layer that is to be transferred to a target material, which is an exterior material, with an adhesive layer being interposed between the surface protection layer and the exterior material to constitute the surface layer of the resulting water- and oil-repellent exterior material. The surface protection layer is, for example, a layer that imparts water- and oil-repellency to the target material and may be a layer that further imparts weather resistance and scratch resistance.

It is preferable that the surface protection layer be arranged in contact with the release film.

In one embodiment, the surface protection layer includes a cured product of a curable resin. In one embodiment, the surface protection layer is composed of a cured product of a curable resin composition including a curable resin. This enhances, for example, weather resistance and scratch resistance.

Examples of the curable resin include a thermosetting resin and an ionizing radiation-curable resin. Among these, an ionizing radiation-curable resin is preferable in order to enhance weather resistance and scratch resistance.

Examples of the thermosetting resin include an unsaturated polyester, a thermosetting polyurethane, a thermosetting (meth)acrylic resin, an epoxy resin, an amino alkyd resin, a melamine resin, a guanamine resin, and a urea resin.

The ionizing radiation-curable resin is a resin that cures upon being irradiated with ionizing radiation. Examples of the ionizing radiation include electromagnetic waves, such as ultraviolet radiation (UV), X-radiation, and γ-radiation; and charged particle radiation, such as an electron beam (EB), α-radiation, and ion radiation. Among these, ultraviolet radiation and an electron beam are preferable, and an electron beam is more preferable. That is, the surface protection layer is preferably a resin layer formed as a result of a curable resin being cured upon being irradiated with an electron beam.

Examples of the ionizing radiation-curable resin include a polymerizable oligomer and a polymerizable prepolymer. Examples of the polymerizable oligomer and the polymerizable prepolymer include oligomers and prepolymers that have a polymerizable unsaturated group, such as an ethylenically unsaturated group, in the molecule thereof. Specific examples thereof include urethane (meth)acrylates, such as a polyether urethane (meth)acrylate, a polycarbonate urethane (meth)acrylate, a polyester urethane (meth)acrylate, and a caprolactone urethane (meth)acrylate; epoxy (meth)acrylates, polyester (meth)acrylates, polyether (meth)acrylates, acrylic (meth)acrylates, and polybutadiene (meth)acrylates. Among these, urethane (meth)acrylates are preferable. Examples of the ethylenically unsaturated group include a (meth)acryloyl group, a vinyl group, and an allyl group. The term "(meth)acrylate" used in the present disclosure refers to both "acrylate" and "methacrylate". The term "(meth)acryloyl group" used in the present disclosure refers to both "acryloyl group" and "methacryloyl group".

The polymerizable oligomer and the polymerizable prepolymer are preferably a polyfunctional oligomer and a polyfunctional prepolymer that have a plurality of polymerizable unsaturated groups in the molecules thereof. The number of the polymerizable unsaturated groups is preferably 2 or more; is preferably 15 or less, is more preferably 8 or less, and is further preferably 6 or less; and is, for example, 2 or more and 15 or less in order to enhance scratch resistance and reduce the occurrence of cure shrinkage.

Examples of the ionizing radiation-curable resin further include, in addition to the above polymerizable oligomer and the above polymerizable prepolymer, a polyfunctional (meth)acrylate monomer that has two or more (meth)acryloyl groups in the molecule thereof. Examples of the polyfunctional (meth)acrylate monomer include aliphatic monomers, such as trimethylolpropane tri(meth)acrylate, ditrimethylolpropane tri(meth)acrylate, ditrimethylolpropane tetra(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, and dipentaerythritol hexa(meth)acrylate; monomers having an isocyanurate skeleton, such as tris(2-(meth)acryloxyethyl) isocyanurate; and modifications of the above monomers.

Examples of the modifications include an ethylene oxide (EO) modification, a propylene oxide (PO) modification, and a caprolactone (CL) modification. Specific examples of the modifications include EO-modified trimethylolpropane tri(meth)acrylate, PO-modified trimethylolpropane tri(meth)acrylate, EO-modified dipentaerythritol hexa(meth)acrylate, PO-modified dipentaerythritol hexa(meth)acrylate, CL-modified dipentaerythritol hexa(meth)acrylate, and CL-modified tris (2-(meth)acryloxyethyl) isocyanurate.

The content of the cured product of the curable resin in the surface protection layer is preferably 50% by mass or more, is more preferably 60% by mass or more, and is further preferably 70% by mass or more. This further enhances, for example, the weather resistance and scratch resistance of the surface protection layer.

In the case where an ultraviolet-curable resin is used as an ionizing radiation-curable resin, it is preferable to use a photopolymerization initiator in combination with the ultraviolet-curable resin. Examples of the photopolymerization initiator include an acetophenone compound, a benzoin compound, an acylphosphine oxide compound, a benzophenone compound, a thioxanthone compound, and an aminobenzophenone compound. The amount of the photopolymerization initiator used is preferably 0.1 parts by mass or more and 5 parts by mass or less relative to 100 parts by mass of the ultraviolet-curable resin.

A monofunctional (meth)acrylate, such as methyl (meth)acrylate, may be used as a diluent in order to, for example, adjust the viscosity of the curable resin composition. In addition to the monofunctional (meth)acrylate, common organic solvents may be used as a diluent.

The surface protection layer preferably includes a silicone compound.

A silicone compound commonly has a low surface free energy and a high affinity for air. Therefore, when a surface protection layer is formed by applying a surface protection layer-forming resin composition including a silicone compound to a substrate film and drying the resulting coating film in the production of the transfer film, the silicone compound is likely to migrate toward air. That is, the silicone compound is likely to accumulate at a surface (i.e., primer layer- or adhesive layer-side surface) of the surface protection layer which is opposite to the substrate film-side surface. Thus, in consideration of the steps for producing the transfer layer included in the transfer film, it has been difficult to increase the content of the silicone compound in the substrate film-side surface of the surface protection layer to a sufficient level. Accordingly, in the case where a transfer film is used, the water- and oil-repellency of the transferred surface protection layer may be at an insufficient level. Furthermore, since the silicone compound accumulates at the primer layer- or adhesive layer-side surface of the surface protection layer, the adhesion between the surface protection layer and the primer layer or adhesive layer may be at an insufficient level.

In the present disclosure, using a release film such that the surface of the release film on which the surface protection layer is to be formed has a low surface free energy as a substrate film or the like enhances the water- and oil-repellency of the transferred surface protection layer. Moreover, the adhesion between the surface protection layer and the primer layer or adhesive layer can be enhanced. It is considered that this is because the silicone compound is drawn toward the release film, which has a low surface free energy, when the surface protection layer of the transfer film is formed and, consequently, an amount of silicone compound which is sufficient for imparting water- and oil-repellency can be present in the release film-side surface of the surface protection layer. The method for reducing the surface free energy of the release film is as described above. Since the silicone compound is present in the release film-side surface of the surface protection layer in a sufficient amount, for example, the content of silicon atoms in the transferred surface protection layer and the surface free energy and water contact angle of the transferred surface protection layer can be adjusted to fall within the above ranges. This enhances the water- and oil-repellency of the surface protection layer.

Examples of the silicone compound include a silicone oil and a silicone resin. Among these, a silicone oil is preferable. Examples of the silicone compound include a polysiloxane.

Examples of the polysiloxane include a dialkylpolysiloxane, a dicycloalkylpolysiloxane, and a diarylpolysiloxane. Examples of the alkyl group included in the dialkylpolysiloxane include alkyl groups having 10 or less carbon atoms, such as a methyl group, an ethyl group, an n-propyl group, an isopropyl group, and a butyl group. Examples of the cycloalkyl group included in the dicycloalkylpolysiloxane include cycloalkyl groups having 10 or less carbon atoms, such as a cyclopentyl group, a cyclohexyl group, and a cycloheptyl group. Examples of the aryl group included in the diarylpolysiloxane include aryl groups having 6 to 12 carbon atoms, such as a phenyl group and a naphthyl group.

A part of the alkyl, cycloalkyl, and aryl groups of the dialkylpolysiloxane, dicycloalkylpolysiloxane, and diarylpolysiloxane may be replaced with another organic group or a hydrogen atom. Examples of the organic group include an alkyl group, a cycloalkyl group, an aryl group, an alkoxy group, an aryloxy group, and groups formed by halogenating the above groups.

Specific examples of the polysiloxane include dimethylpolysiloxane; a silicone compound formed as a result of a part of the methyl groups included in dimethylpolysiloxane being replaced with an aryl group, such as a phenyl group; a silicone compound formed as a result of a part of the methyl groups included in dimethylpolysiloxane being replaced with a hydrogen atom or an alkyl group having 2 or more carbon atoms; a silicone compound formed as a result of a part of the methyl groups included in dimethylpolysiloxane being replaced with a halogenated phenyl group; and a silicone compound formed as a result of a part of the methyl groups included in dimethylpolysiloxane being replaced with a fluoroester group. Examples of the polysiloxane further include an epoxy-modified polysiloxane, such as epoxy-modified dimethylpolysiloxane; an amino-modified polysiloxane, such as amino-modified dimethylpolysiloxane; a polyether-modified polysiloxane, such as polyether-modified dimethylpolysiloxane; a higher fatty acid ester-modified polysiloxane; and a higher fatty acid amide-modified polysiloxane.

The polysiloxane may be a reactive polysiloxane having a polymerizable unsaturated group or an unreactive polysiloxane that does not have the polymerizable unsaturated group. Examples of the polymerizable unsaturated group include ethylenically unsaturated groups, such as a (meth)acryloyl group, a vinyl group, and an allyl group. The reactive polysiloxane having a polymerizable unsaturated group reacts with an ionizing radiation-curable resin upon being irradiated with ionizing radiation, such as an electron beam or ultraviolet radiation. This enables, for example, a polysiloxane having the molecular weight described below, which is relatively likely to bleedout, to be fixed to the curable resin system. When the surface protection layer has the above-described features, for example, the discharge of the silicone compound from the surface protection layer can be reduced even when the surface protection layer is exposed to, for example, a high-temperature, high-humidity environment. As a result, the water- and oil-repellency of the surface protection layer can be maintained in a suitable manner. Moreover, the adhesion of the surface protection layer to the other layers may be maintained.

Therefore, among polysiloxanes, a reactive polysiloxane is preferable, and a reactive polysiloxane having a (meth)acryloyl group is more preferable. A reactive polysiloxane having an acryloyl group is further preferable because, in such a case, the reaction rate of the reactive polysiloxane during the formation of the surface protection layer (i.e., during curing) can be increased.

The polymerizable unsaturated group may be bonded to the reactive polysiloxane at any position. That is, the polymerizable unsaturated group may be bonded to the terminal or inside of the molecule of the reactive polysiloxane. The reactive polysiloxane may have a polymerizable unsaturated group bonded to one of the terminals of the molecule, polymerizable unsaturated groups bonded to both terminals of the molecule, a polymerizable unsaturated group bonded to a side chain, polymerizable unsaturated groups bonded to one of the terminals and a side chain of the molecule, or polymerizable unsaturated groups bonded to both terminals and a side chain of the molecule. A reactive polysiloxane having polymerizable unsaturated groups bonded to both terminals of the molecule is preferable in order to increase the reaction rate of the reactive polysiloxane during the formation (i.e., during curing) of the surface protection layer.

The reactive polysiloxane is preferably a polysiloxane having a (meth)acryloyl group and is more preferably a polysiloxane having two or more (meth)acryloyl groups. Specifically, the reactive polysiloxane is preferably dimethylpolysiloxane having a (meth)acryloyl group; is more preferably dimethylpolysiloxane having a (meth)acryloyl group bonded to one of the terminals of the molecule, dimethylpolysiloxane having (meth)acryloyl groups bonded to both terminals of the molecule, dimethylpolysiloxane having a (meth)acryloyl group bonded to a side chain of the molecule, or dimethylpolysiloxane having (meth)acryloyl groups bonded to one or both of the terminals of the molecule and a side chain of the molecule; and is further preferably dimethylpolysiloxane having (meth)acryloyl groups bonded to both terminals of the molecule.

The number-average molecular weight of the silicone compound is preferably 300 or more, is more preferably 500 or more, and is further preferably 1,000 or more; is preferably 10,000 or less, is more preferably 5,000 or less, and is further preferably 4,000 or less; and is, for example, 300 or more and 10,000 or less. In such a case, for example, the compatibility between the silicone compound and the curable resin is enhanced to an adequate degree, the silicone compound can be present in the release film-side surface in an adequate manner during the formation of the surface protection layer, and suitable water- and oil-repellency can be achieved consequently. Note that the above number-average molecular weight can be determined by gel permeation chromatography (GPC) in terms of standard polystyrene.

The content of the silicone compound in the surface protection layer is preferably 0.5% by mass or more; is preferably 5% by mass or less, is more preferably 3% by mass or less, and is further preferably 2% by mass or less; and is, for example, 0.5% by mass or more and 5% by mass or less, of the solid content in the curable resin composition. In the case where the reactive silicone compound, such as reactive polysiloxane, has reacted with a curable resin to be incorporated in the curable resin system of the surface resin layer, the content of the reactive silicone compound (including the reactive silicone compound incorporated in the curable resin system) can be calculated on the basis of, for example, the solid content ratio of the reactive silicone compound to the curable resin composition that constitutes the surface resin layer.

It is considered that at least a part of the silicone compound be present in the release film-side surface of the surface protection layer to impart the water- and oil-repellency to the transferred surface protection layer. Thus, the content of the silicone compound is preferably 0.5% by mass or more. If a large amount of the silicone compound is present in the adhesive layer-side or primer layer-side surface of the surface protection layer, the adhesion of the surface protection layer to the above layers may be reduced to an insufficient level and, in the formation of the adhesive layer-side or primer layer, it may become impossible to apply an adhesive layer-forming solution or a primer layer-forming solution in a suitable manner. Accordingly, the content of the silicone compound is preferably 5% by mass or less.

The surface protection layer preferably includes a weather resistance improver (hereinafter, referred to also as "weatherproofing agent"). Since the exterior material is subjected to direct sunlight, wind, and rain on a daily basis, the exterior material desirably has excellent weather resistance. The use of a weatherproofing agent enhances, for example, the weather resistance of the surface protection layer. This reduces the degradation and yellowing of the resin constituting the surface protection layer and increases interlayer adhesion. Furthermore, the lower layers (e.g., the primer layer, the adhesive layer, and the exterior material) can be protected. Consequently, for example, degradation, discoloration, and yellowing can be limited. This enables the exterior material to be used outdoors over a long period of time.

Examples of the weatherproofing agent include an ultraviolet absorber and a light stabilizer.

The ultraviolet absorber absorbs harmful ultraviolet radiation and thereby enhances the long-term weather resistance of the exterior material. Although the light stabilizer hardly absorbs ultraviolet radiation, it efficiently captures harmful free radicals generated by ultraviolet radiation.

Examples of the ultraviolet absorber include organic ultraviolet absorbers, such as a benzotriazole ultraviolet absorber, a triazine ultraviolet absorber, a benzophenone ultraviolet absorber, an oxybenzophenone ultraviolet absorber, a salicylic acid ester ultraviolet absorber, and a cyano (meth)acrylate ultraviolet absorber; and inorganic ultraviolet absorbers, such as titanium dioxide, cerium oxide, and zinc oxide. Among these, organic ultraviolet absorbers are preferable, and a triazine ultraviolet absorber is more preferable.

Examples of the triazine ultraviolet absorber include a hydroxyphenyltriazine ultraviolet absorber. Examples of the hydroxyphenyltriazine ultraviolet absorber include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-(4,6-diphenyl-1,3,5-triazin-2-yl)-5-[2-(2-ethylhexanoyloxy)ethoxy]phenol, and 2-[4-[(2-hydroxy-3-(2'-ethyl)hexyl)oxy]-2-hydroxyphenyl]-4,6-bis (2,4-dimethylphenyl)-1,3,5-triazine.

The content of the ultraviolet absorber in the surface protection layer is preferably 0.1% by mass or more and is more preferably 0.3% by mass or more; is preferably 10% by mass or less, is more preferably 7% by mass or less, and is further preferably 5% by mass or less; and is, for example, 0.1% by mass or more and 10% by mass or less, of the solid content in the curable resin composition. This enhances, for example, the weather resistance of the surface protection layer. When the content of the ultraviolet absorber is equal to or less than the upper limit, for example, the degradation of the transparency of the surface protection layer can be limited. Moreover, the likelihood of the ultraviolet absorber bleeding out to reduce the adhesion between the surface protection layer and the primer layer can be reduced.

Examples of the light stabilizer include a hindered amine light stabilizer (HALS).

Examples of the hindered amine light stabilizer include 1,2,2,6,6-pentamethyl-4-piperidinyl (meth)acrylate, bis(1,2,2,6,6-pentamethyl-4-piperidyl) sebacate, bis(2,2,6,6-pentamethyl-4-piperidyl) sebacate, bis(1,2,2,6,6-pentamethyl-4-piperidinyl) sebacate, methyl (1,2,2,6,6-pentamethyl-4-piperidinyl) sebacate, 2,4-bis[N-butyl-N-(1-cyclohexyloxy-2,2,6,6-tetramethylpiperidin-4-yl)amino]-6-(2-hydroxyethylamine)-1,3,5-triazine, bis(1,2,2,6,6-pentamethyl-4-piperidyl) 2-(3,5-di-tert-butyl-4-hydroxybenzyl)-2'-n-butylmalonate, bis(1,2,2,6,6-pentamethyl-4-piperidyl) sebacate, bis(1-octyloxy-2,2,6,6-tetramethyl-4-piperidyl) sebacate, and tetrakis(2,2,6,6-tetramethyl-4-piperidyl)-1,2,3,4-butanetetracarboxylate.

The content of the light stabilizer in the surface protection layer is preferably 0.1% by mass or more and is more preferably 0.3% by mass or more; is preferably 10% by mass or less, is more preferably 7% by mass or less, and is further preferably 5% by mass or less; and is, for example, 0.1% by mass or more and 10% by mass or less, of the solid content in the curable resin composition. This enhances, for example, the weather resistance of the surface protection layer. When the content of the light stabilizer is equal to or less than the upper limit, for example, the degradation of the transparency of the surface protection layer can be limited. Moreover, the likelihood of the light stabilizer bleeding out to reduce the adhesion between the surface protection layer and the primer layer can be reduced.

The surface protection layer may include additives. Examples of the additives include a polymerization inhibitor, a crosslinking agent, an antistatic agent, an adhesion improver, an antioxidant, a leveling agent, a thixotropic agent, a coupling agent, a plasticizer, an antifouling agent, an antifoaming agent, and a filler.

Examples of the filler include organic particles and inorganic particles. Examples of the organic particles include synthetic resin particles, such as (meth)acrylic resin particles, polycarbonate resin particles, and styrene resin particles. Examples of the inorganic particles include particles of silica, alumina, zirconia, titania, kaolinite, iron oxide, diamond, and silicon carbide.

The curable resin composition may include an organic solvent in order to, for example, increase ease of application of the curable resin composition. Examples of the organic solvent include hydrocarbon solvents, such as toluene, xylene, hexane, and octane; alcohol solvents, such as ethanol, propanol, butanol, pentanol, hexanol, octanol, and decanol; ketone solvents, such as acetone, methyl ethyl ketone, methyl isobutyl ketone, diisobutyl ketone, and cyclohexanone; and ester solvents, such as ethyl acetate, butyl acetate, amyl acetate, ethyl butyrate, butyl butyrate, butyl stearate, methyl benzoate, methyl lactate, ethyl lactate, and butyl lactate.

The thickness of the surface protection layer is preferably 1 µm or more, is more preferably 1.5 µm or more, and is further preferably 2 µm or more; is preferably 20 µm or less, is more preferably 10 µm or less, and is further preferably 6 µm or less; and is, for example, 1 µm or more and 20 µm or less. In such a case, for example, excellent water- and oil-repellency, weather resistance, and scratch resistance can be imparted to the exterior material. In the present disclosure, the thickness of each of the above layers can be determined using a scanning electron microscope (SEM) image of a cross section of the layer.

The surface protection layer is formed, for example, in the following manner. The curable resin composition is applied to the release film at an intended thickness. In the case where an organic solvent is used, drying is performed to remove the organic solvent and form a coating film (i.e., uncured resin layer). Drying is performed, for example, at 40°C or more and 120°C or less for 10 seconds or more and 10 minutes or less. Subsequently, in the case where a thermosetting resin is used, the coating film is cured by being heated at a temperature necessary for curing. In the case where an ionizing radiation-curable resin is used, the coating film is cured by being irradiated with ionizing radiation. The surface protection layer can be formed in the above-described manner. The above curing treatment may be performed subsequent to the application of the curable resin composition and prior to the formation of the other layers and may be performed subsequent to the formation of the other layers.

Examples of the method for applying the curable resin composition to the release film include dipping, flow coating, spraying, spin coating, gravure coating, microgravure coating, die coating, a slit reverse method, roll coating, reverse roll coating, comma coating, blade coating, air knife coating, an offset method, and bar coating.

In the case where an electron beam is used as ionizing radiation, the acceleration voltage may be selected appropriately in accordance with the type of the resin used and the thickness of the layer. It is preferable to cure the uncured resin layer at an acceleration voltage of 70 kV or more and 300 kV or less. The amount of irradiation with electron beams is preferably 0.5 Mrad or more, is more preferably 1 Mrad or more, and is further preferably 3 Mrad or more; is preferably 30 Mrad or less, is more preferably 20 Mrad or less, and is further preferably 15 Mrad or less; and is, for example, 0.5 Mrad or more and 30 Mrad or less.

Examples of electron beam sources that can be used include a Cockcroft-Walton accelerator, a Van de Graaff accelerator, a resonant transformer accelerator, an insulated core transformer accelerator, and various electron beam accelerators, such as a linear accelerator, a Dynamitron accelerator, and a high-frequency accelerator.

In the case where ultraviolet radiation is used as ionizing radiation, for example, it is preferable to use at least ultraviolet radiation having wavelengths of 190 nm or more and 380 nm or less. Examples of ultraviolet radiation sources include a xenon lamp, a low-pressure mercury lamp, high-pressure mercury lamp, an ultra-high-pressure mercury lamp, a metal halide lamp, a carbon arc lamp, and a tungsten lamp. The amount of light exposure is, for example, 10 mJ/cm² or more and 350 mJ/cm² or less.

In the transfer film according to the present disclosure, the transfer layer may include a primer layer interposed between the surface protection layer and the adhesive layer. The primer layer increases, for example, the adhesion between the surface protection layer and the adhesive layer.

In one embodiment, the primer layer includes a resin material.

Examples of the resin material include a (meth)acrylic resin, a urethane resin, a butyral resin, a polyolefin, a chlorinated polyolefin, a vinyl chloride-vinyl acetate copolymer, and a polyester. Among these, a urethane resin is preferable.

The urethane resin is preferably a urethane resin having a (meth)acrylate skeleton in the polyurethane polymer chain in consideration of weather resistance and durability. Examples of the urethane resin having a (meth)acrylate skeleton in the polyurethane polymer chain include a urethane (meth)acrylate copolymer, which is a copolymer of a urethane component and a (meth)acrylate component, and a resin that includes a (meth)acrylic resin having a hydroxyl or isocyanate group that serves as a polyol or polyisocyanate component constituting a polyurethane. Among these, a urethane (meth)acrylate copolymer is preferable. The urethane (meth)acrylate copolymer is preferably, for example, a urethane (meth)acrylate block copolymer.

In consideration of the adhesion between the primer layer and the surface protection layer, the urethane (meth)acrylate copolymer may further have a polycarbonate or polyester skeleton in the polyurethane polymer chain. Examples of such a urethane (meth)acrylate copolymer include a polycarbonate urethane (meth)acrylate copolymer, which is a copolymer of a polycarbonate urethane component with a (meth)acrylate component, and a polyester urethane (meth)acrylate copolymer, which is a copolymer of a polyester urethane component with a (meth)acrylate component.

The urethane (meth)acrylate copolymer can be produced by, for example, the reaction of a (meth)acrylic resin having at least two hydroxyl groups per molecule with a polyol and a polyisocyanate (see, e.g., Japanese Unexamined Patent Application Publication No. H6-100653 (No. 1994-100653)) or the reaction of a urethane prepolymer having unsaturated double bonds at both terminals with a (meth)acrylate monomer (see, e.g., Japanese Unexamined Patent Application Publication No. H10-1524 (No. 1998-1524)).

Examples of the urethane prepolymer include a polycarbonate urethane prepolymer produced by the reaction of a polycarbonate diol with a diisocyanate; and a polyester urethane prepolymer produced by the reaction of a polyester diol with a diisocyanate. Examples of the diisocyanate include aliphatic isocyanates, such as hexamethylene diisocyanate; and alicyclic isocyanates, such as isophorone diisocyanate and hydrogenated xylylene diisocyanate. Examples of the (meth)acrylate monomer include a (meth)acrylic acid and a (meth)acrylic acid alkyl ester including an alkyl group having 1 to 6 carbon atoms.

Specific examples of the urethane resin include a polycarbonate urethane (meth)acrylate copolymer, a polyester urethane (meth)acrylate copolymer, a polyether urethane (meth)acrylate copolymer, and a caprolactone urethane (meth)acrylate copolymer. The above resin materials are preferable in order to enhance weather resistance and increase the adhesion between the surface protection layer and the adhesive layer.

The proportion (i.e., mass ratio) of the urethane component to the (meth)acrylate component that are included in the urethane resin is preferably 20/80 or more, is more preferably 50/50 or more, and is further preferably 70/30 or more; is preferably 99/1 or less and is more preferably 95/5 or less; and is, for example, 20/80 or more and 99/1 or less. In such a case, for example, weather resistance can be further enhanced. Note that the content of the (meth)acrylate component in the urethane resin is the proportion of the monomer units constituting the (meth)acrylate skeleton relative to the total mass of the urethane resin. The content of the (meth)acrylate component in the urethane resin is determined by measuring the NMR spectrum of the urethane resin and calculating the proportion of the area of peaks that belong to the (meth)acrylate component relative to the total area of all the peaks.

The weight-average molecular weight of the urethane resin is preferably 10,000 or more and is more preferably 30,000 or more; is preferably 100,000 or less and is more preferably 80,000 or less; and is, for example, 10,000 or more and 100,000 or less. In such a case, for example, weather resistance can be further enhanced. The term "weight-average molecular weight" used in the description refers to a weight-average molecular weight determined by gel permeation chromatography (GPC) in terms of standard polystyrene.

The content of the resin material in the primer layer is, for example, 50% by mass or more.

The primer layer may further include particles. In such a case, for example, the phenomenon in which the adhesive layer and the release film adhere to each other during the production or storage of the transfer film, that is, blocking, can be reduced.

Examples of the particles include inorganic particles and organic particles. Examples of the inorganic particles include inorganic particles of silica, alumina, aluminum hydroxide, barium sulfate, calcium carbonate, and talc.

Examples of the shape of the particles include spherical, oval, polyhedral, and scale-like.

The average size of the particles is preferably 0.1 µm or more and is more preferably 0.5 µm or more; is preferably 10 µm or less, is more preferably 8 µm or less, and is further preferably 5 µm or less; and is, for example, 0.1 µm or more and 10 µm or less. When the above average particle size falls within the above range, intended transparency can be maintained and an excellent antiblocking property can be achieved.

The content of the particles in the primer layer is preferably 0.1 parts by mass or more, is more preferably 1 part by mass or more, and is further preferably 3 parts by mass or more; is preferably 30 parts by mass or less, is more preferably 25 parts by mass or less, and is further preferably 20 parts by mass or less; and is, for example, 0.1 parts by mass or more and 30 parts by mass or less, relative to 100 parts by mass of the resin material.

The primer layer may include an additive. Examples of the additive include a weatherproofing agent, an abrasion resistance improver, an infrared absorbent, an antistatic agent, an adhesion improver, a leveling agent, a thixotropic agent, a coupling agent, a plasticizer, an antifoaming agent, a filler, and a colorant.

The primer layer may include a weatherproofing agent. In such a case, for example, the weather resistance of the primer layer can be enhanced and, consequently, the water- and oil-repellent exterior material can be used outdoors over a long period of time. Examples of the weatherproofing agent include an ultraviolet absorber and a light stabilizer. Details of the ultraviolet absorber and the light stabilizer are as described above.

The content of the ultraviolet absorber is preferably 0.1 parts by mass or more, is more preferably 3 parts by mass or more, and is further preferably 10 parts by mass or more; is preferably 50 parts by mass or less, is more preferably 40 parts by mass or less, and is further preferably 35 parts by mass or less; and is, for example, 0.1 parts by mass or more and 50 parts by mass or less, relative to 100 parts by mass of the resin material constituting the primer layer.

The content of the light stabilizer is preferably 0.1 parts by mass or more, is more preferably 1 part by mass or more, and is further preferably 3 parts by mass or more; is preferably 15 parts by mass or less and is more preferably 10 parts by mass or less; and is, for example, 0.1 parts by mass or more and 15 parts by mass or less, relative to 100 parts by mass of the resin material constituting the primer layer.

The primer layer-forming resin composition may include, for example, an isocyanate curing agent in order to facilitate the curing of the resin material. Examples of the isocyanate curing agent include tolylene diisocyanate, diphenylmethane diisocyanate, hexamethylene diisocyanate, xylylene diisocyanate, cyclohexane phenylene diisocyanate, and naphthalene-1,5-diisocyanate.

The amount of the isocyanate curing agent included in the primer layer-forming resin composition is preferably 1 part by mass or more, is more preferably 3 parts by mass or more, and is further preferably 5 parts by mass or more; is preferably 40 parts by mass or less and is more preferably 30 parts by mass or less; and is, for example, 1 part by mass or more and 40 parts by mass or less, relative to 100 parts by mass of the resin material, in order to increase the adhesion between the surface protection layer and the adhesive layer.

The thickness of the primer layer is preferably 0.1 µm or more; is preferably 10 µm or less and is more preferably 5 µm or less; and is, for example, 0.1 µm or more and 10 µm or less. In such a case, for example, the adhesion between the surface protection layer and the adhesive layer can be further increased. The primer layer preferably has a smaller thickness than the adhesive layer.

The primer layer can be formed by, for example, applying a primer layer-forming resin composition that includes the above-described components and, as needed, an organic solvent to the surface protection layer by a printing or coating method known in the related art and, as needed, performing drying and curing.

Prior to the formation of the primer layer, the surface protection layer may be subjected to a surface treatment in order to increase the adhesiveness between the surface protection layer and the primer layer. Examples of the surface treatment method include a corona discharge treatment, a plasma treatment, a chromium oxidation treatment, a flame treatment, a hot-air treatment, and an ozone/ultraviolet treatment.

In order to increase the adhesiveness between the surface protection layer and the primer layer, after the crosslink curing of the surface protection layer has been performed to a semi-cured state and the primer layer-forming resin composition has been applied to the semi-cured surface protection layer, the surface protection layer may be irradiated with ionizing radiation in order to completely cure the surface protection layer.

The transfer layer included in the transfer film according to the present disclosure may include a design layer. In such a case, for example, a graphical design function can be further imparted to the exterior material, which is a target material, in addition to water- and oil-repellency. The transfer layer may include the design layer interposed between the primer layer and the adhesive layer.

The design layer includes, for example, a design. Examples of the design include a character, a figure, a symbol, and a combination thereof. The design may be monochrome one without any pattern (i.e., "solid image"). The design layer may be disposed on a part or the entirety of the surface of the primer layer which is opposite to the surface on which the surface protection layer is disposed. The design layer may be a layer that covers the entirety of the surface of the primer layer which is opposite to the surface on which the surface protection layer is disposed. In another case, the design layer may be formed, on the surface of the primer layer which is opposite to the surface on which the surface protection layer is disposed, in a pattern so as to include a region in which the design is arranged and a region in which the design is not arranged.

In one embodiment, the design layer includes a resin material and a colorant.

Examples of the resin material include a (meth)acrylic resin, a polyolefin, a chlorinated polyolefin, a vinyl chloride-vinyl acetate copolymer, a vinyl chloride-vinyl acetate-(meth)acrylate copolymer, a polystyrene, a polyester, a polyurethane, a polyamide, a butyral resin, and a cellulose resin.

Examples of the colorant include a pigment and a dye. Specific examples thereof include inorganic pigments, such as carbon black, iron black, titanium white, antimony white, chrome yellow, titanium yellow, iron red, cadmium red, ultramarine blue, and cobalt blue; organic pigments and dyes, such as quinacridone red, isoindolinone yellow, phthalocyanine blue, azomethine azo black, and a nickel azo complex; metal pigments that are scale-like foil pieces of aluminum, brass, and the like; and pearl gloss pigments that are scale-like foil pieces of titanium dioxide-coated mica, basic lead carbonate, and the like.

The content of the colorant in the design layer is preferably 10 parts by mass or more, is more preferably 30 parts by mass or more, and is further preferably 50 parts by mass or more; is preferably 500 parts by mass or less, is more preferably 300 parts by mass or less, and is further preferably 200 parts by mass or less; and is, for example, 10 parts by mass or more and 500 parts by mass or less, relative to 100 parts by mass of the resin material included in the design layer.

The design layer may include an additive. Examples of the additive include a weatherproofing agent, such as an ultraviolet absorber or a light stabilizer, an abrasion resistance improver, an infrared absorbent, an antistatic agent, an adhesion improver, a leveling agent, a thixotropic agent, a coupling agent, a plasticizer, an antifoaming agent, and a filler.

The design layer may be transparent, semi-transparent, or opaque.

Examples of the method for forming the design layer include the following printing methods known in the related art: gravure printing, offset printing, silk screen printing, transfer printing with a transfer sheet, sublimation transfer printing, and ink-jet printing.

The thickness of the design layer is preferably 0.5 µm or more, is more preferably 1 µm or more, and is further preferably 2 µm or more; is preferably 20 µm or less, is more preferably 15 µm or less, and is further preferably 10 µm or less; and is, for example, 0.5 µm or more and 20 µm or less. In such a case, for example, the graphical design function of the transfer layer can be enhanced.

The adhesive layer may serve also as a design layer.

The transfer layer included in the transfer film according to the present disclosure may include an adhesive layer.

The adhesive layer enables the transfer film to adhere onto the surface of the target material. In one embodiment, the adhesive layer serves as a surface layer of the transfer layer which is opposite to the release film-side surface. The adhesive layer is a layer that is in contact with the target material subsequent to the transfer. This enables the transfer layer to be transferred and bonded to the target material in a suitable manner.

In the present disclosure, it is possible to transfer the surface protection layer from the transfer film to the target material with suitable adhesion by bonding the transfer film to the target material such that the adhesive layer comes into contact with the surface of the target material and subsequently removing the release film.

Preferable examples of adhesive resins that can be included in the adhesive layer include thermal bonding resins, such as a (meth)acrylic resin, a polyolefin, a chlorinated polyolefin, a vinyl chloride-vinyl acetate copolymer, a polyamide, a polyester, a chlorinated rubber, a urethane resin, an epoxy resin, and a styrene resin. Among these, a (meth)acrylic resin, such as polymethyl methacrylate, is preferable in order to enhance weather resistance.

The content of the adhesive resin in the adhesive layer is preferably 50% by mass or more, is more preferably 60% by mass or more, and is further preferably 70% by mass or more.

The adhesive layer may include an additive. Examples of the additive include a weatherproofing agent, such as an ultraviolet absorber or a light stabilizer, an abrasion resistance improver, an infrared absorbent, an antistatic agent, an adhesion improver, a leveling agent, a thixotropic agent, a coupling agent, a plasticizer, an antifoaming agent, a filler, and a colorant.

The adhesive layer may include a weatherproofing agent. Details of the weatherproofing agent are as described above.

The content of the ultraviolet absorber in the adhesive layer may be 0.1 parts by mass or more, 1 part by mass or more, or 3 parts by mass or more; may be 25 parts by mass or less, 20 parts by mass or less, or 15 parts by mass or less; and may be, for example, 0.1 parts by mass or more and 25 parts by mass or less, relative to 100 parts by mass of the adhesive resin. The content of the light stabilizer in the adhesive layer may be 0.05 parts by mass or more, 0.5 parts by mass or more, or 1 part by mass or more; may be 7 parts by mass or less or 5 parts by mass or less; and may be, for example, 0.05 parts by mass or more and 7 parts by mass or less, relative to 100 parts by mass of the adhesive resin.

The thickness of the adhesive layer is preferably 1 µm or more; is preferably 12 µm or less and is more preferably 6 µm or less; and is, for example, 1 µm or more and 12 µm or less. In such a case, for example, the transfer layer can be bonded to the target material in a suitable manner and excellent transparency can be maintained.

The adhesive layer preferably has a larger thickness than the primer layer.

The adhesive layer can be formed by, for example, applying a composition (i.e., an adhesive layer-forming composition) that includes components that constitute the adhesive layer to the surface protection layer or the primer layer and, as needed, performing drying.

The transfer film according to the present disclosure may include a cover film (i.e., a protection film) disposed on the adhesive layer. Specifically, a cover film may be bonded to the adhesive layer. In such a case, the surface of the adhesive layer can be protected in a suitable manner, which is preferable in consideration of the storage of the transfer film. When the transfer film is used, the cover film is removed from the adhesive layer in order to expose the adhesive layer and the transfer film is subsequently bonded to the target material with the adhesive layer being interposed therebetween.

The cover film is composed of, for example, a resin material, such as a polyolefin.

A water- and oil-repellent exterior material according to the present disclosure includes an exterior material and a surface protection film disposed on at least a part of the surface of the exterior material. The surface protection film is the transfer layer included in the transfer film according to the present disclosure. The surface protection layer included in the transfer layer constitutes at least a part of the surface layer of the water- and oil-repellent exterior material.

In one embodiment, as illustrated in Fig. 3, a water- and oil-repellent exterior material 2 includes an exterior material 30 and a transfer layer 20 disposed on the surface of the exterior material 30. In the embodiment illustrated in Fig. 3, the transfer layer 20 includes an adhesive layer 24, a primer layer 23, and a surface protection layer 22 that are arranged in this order from the exterior material 30. That is, the water- and oil-repellent exterior material 2 includes the exterior material 30, the adhesive layer 24, the primer layer 23, and the surface protection layer 22 that are arranged in this order. The release film 10 may be removed before the water- and oil-repellent exterior material 2 is used.

The exterior material is a target material to which the transfer layer of the transfer film according to the present disclosure is to be transferred.

The material constituting a portion of the exterior material to which the transfer layer of the transfer film according to the present disclosure is to be transferred can be selected from a resin material, paper, a nonwoven or woven fabric, wood, a metal, a non-metal inorganic material, and the like appropriately in accordance with the intended application. The shape of the exterior material is not limited; the exterior material may have a tabular shape, such as a sheet-like shape, or a three-dimensional shape, such as a shape of a curved plate or a polygonal column. Examples of the resin material include polycarbonates; (meth)acrylic resins, such as a polymethyl (meth)acrylate and a poly(meth)acrylate; polyolefins, such as a polyethylene and a polypropylene; cyclic polyolefins; polystyrenes; an acrylonitrile-butadiene-styrene (ABS) copolymer; vinyl resins, such as polyvinyl alcohol, polyvinyl acetate, polyvinyl chloride, and polyvinyl fluoride; polyesters, such as polyethylene terephthalate and polyethylene naphthalate; and a melamine resin, a polyamide, a polyimide, a polysulfone, a polyether sulfone, a polyether ketone, and a polyether imide.

In one embodiment, the exterior material may be a molded resin body composed of a resin material or a molded transparent resin body composed of a transparent resin material. The total luminous transmittance of the molded transparent resin body is, for example, 50% or more, may be 70% or more, and may be 80% or more. Although it is preferable to maximize the above total luminous transmittance in consideration of transparency, the upper limit for the total luminous transmittance may be set to, for example, 98% or 95%. In the present disclosure, the total luminous transmittance is determined in conformity with JIS K 7105:1981.

Examples of the transparent resin material include polycarbonates; (meth)acrylic resins, such as polymethyl methacrylate; polyesters, such as polyethylene terephthalate and polyethylene naphthalate; and an ABS copolymer. Among these, polycarbonates are preferable because they are excellent in terms of transparency and impact resistance.

The exterior material is a molded body for outdoor use and is specifically a molded body required to have certain weather resistance because it is subjected to direct sunlight, wind, and rain on a daily basis. Examples of the exterior material include exterior materials for building structures; exterior materials for vehicles, ships, and aircrafts; exterior materials for industrial machines, and various types of lenses.

Examples of the exterior materials for building structures (i.e., building materials) include molded transparent resin bodies that form noise barrier walls or windbreak walls used in general roads, highways, and the like; and molded transparent resin bodies that form window materials, partition boards for balcony, roof members for terrace or carport, and agricultural houses.

Examples of the exterior materials for vehicles include window materials, such as a side window, a rear window, a roof window, a front window, and a quarter window; a headlight cover, a winker lamp lens, and a reflector; and a pillar. Examples of the vehicles include an automobile, a railway vehicle, construction equipment, and a light vehicle, such as a golf cart. Examples of the exterior materials for industrial machines include window materials for visual identification which are included in machine tools. Examples of the lenses include a lens for signals.

The water- and oil-repellent exterior material according to the present disclosure can be produced by, for example, using the transfer film according to the present disclosure, that is, specifically, transferring the transfer layer included in the transfer film onto at least a part of the surface of the exterior material. In one embodiment, a method for producing the water- and oil-repellent exterior material according to the present disclosure includes preparing the transfer film according to the present disclosure and an exterior material; arranging the transfer film on the exterior material such that the transfer layer included in the transfer film faces the exterior material, and removing the release film of the transfer film.

In one embodiment, the transfer film according to the present disclosure, which includes a transfer layer including a surface protection layer and an adhesive layer, and an exterior material are prepared. The transfer film is disposed on at least a part of the surface of the exterior material such that the adhesive layer included in the transfer film comes into contact with the surface of the exterior material.

In one embodiment, the transfer film according to the present disclosure, which includes a transfer layer including a surface protection layer, and an exterior material that includes an adhesive layer disposed on the surface thereof are prepared. The transfer film is disposed on at least a part of the surface of the exterior material such that the transfer layer included in the transfer film comes into contact with the adhesive layer disposed on the exterior material. Examples of the adhesive layer disposed on the exterior material include the adhesive layer that can be included in the transfer layer of the transfer film.

The transfer film may be disposed on the exterior material while heating is performed and/or the pressure is increased. Subsequently, the release film of the transfer film is removed from the transfer layer, that is, specifically, the surface protection layer. Hereby, the water- and oil-repellent exterior material can be produced. Examples of the transfer method include thermal transfer methods, such as a roll transfer method and a press transfer method; and an in-mold forming method.

The release film is not necessarily removed from the transfer layer immediately and may be used as a protection film for the water- and oil-repellent exterior material. In such a case, the release film may be removed from the transfer layer before the water- and oil-repellent exterior material is used.

After the transfer film has been disposed on the surface of the exterior material, furthermore, the water- and oil-repellent exterior material may be subjected to working, such as bending. The working may be performed either prior or subsequent to the removal of the release film.

The water- and oil-repellent exterior material according to the present disclosure may be produced by, for example, performing the formation of the exterior material and the arrangement of the transfer film simultaneously. For example, a resin is injected to the adhesive layer of the transfer film such that the transfer film can be integrated with the resulting molded resin body (i.e., the injection-molded body), which serves as an exterior material. Subsequently, the release film is removed from the transfer layer. In such a case, examples of the method for forming the molded resin body include various types of injection molding methods, such as in-mold forming, insert molding, a simultaneous injection molding-decoration method, blow molding, and gas-assisted injection molding.

The present disclosure relates to, for example, [1] to [15] below.
[1] A transfer film for exterior materials, the transfer film including a release film and a transfer layer, the transfer layer including a surface protection layer, the surface protection layer constituting a surface layer of the transfer layer, the surface layer facing the release film, wherein a content of silicon atoms in a surface of the surface protection layer, the surface facing the release film, the content being determined by X-ray photoelectron spectroscopy, is 3 atomic% or more and 30 atomic% or less.
[2] The transfer film according to [1], wherein a content of silicon atoms in a surface of a specimen prepared by transferring the transfer layer to a target material, the specimen having been subjected to a weathering test under conditions below, the surface in which the surface protection layer is located, the content being determined by X-ray photoelectron spectroscopy, is 2.5 atomic% or more and 30 atomic% or less.
   <Weathering Test>
   The surface protection layer of the specimen is irradiated with ultraviolet radiation for 20 hours under irradiation conditions below using a tester "Metal Weather" equipped with a metal halide lamp. Subsequently, water is sprayed on the specimen for 30 seconds. Then, condensation is caused for 4 hours under condensation condition below. The above steps are considered one cycle and repeated for 12.5 cycles.
   «Irradiation Conditions»
      Illuminance: 100 mW/cm²,
      Black panel temperature: 63°C, Humidity: 50%RH
   <<Condensation Condition>>
      Humidity: 98%RH
[3] A transfer film for exterior materials, the transfer film including a release film and a transfer layer, the transfer layer including a surface protection layer, the surface protection layer constituting a surface layer of the transfer layer, the surface layer facing the release film, wherein a surface free energy of a surface of the surface protection layer, the surface facing the release film, is 20 mJ/m² or more and 40 mJ/m² or less.
[4] The transfer film according to [3], wherein a surface free energy of a surface of a specimen prepared by transferring the transfer layer to a target material, the specimen having been subjected to a weathering test under the conditions, the surface in which the surface protection layer is located, is 20 mJ/m² or more and 40 mJ/m² or less.
[5] A transfer film for exterior materials, the transfer film including a release film and a transfer layer, the transfer layer including a surface protection layer, the surface protection layer constituting a surface layer of the transfer layer, the surface layer facing the release film, wherein a water contact angle of a surface of the surface protection layer, the surface facing the release film, is 90° or more.
[6] The transfer film according to [5], wherein a water contact angle of a surface of a specimen prepared by transferring the transfer layer to a target material, the specimen having been subjected to a weathering test under the conditions, the surface in which the surface protection layer is located, is 85° or more.
[7] The transfer film according to any one of [1] to [6], wherein a surface free energy of a surface of the release film, the surface facing the transfer layer, is 15 mJ/m² or more and 35 mJ/m² or less.
[8] The transfer film according to any one of [1] to [7], wherein the release film is in contact with the surface protection layer of the transfer layer.
[9] The transfer film according to any one of [1] to [8], wherein the transfer layer further includes an adhesive layer.
[10] The transfer film according to [9], wherein the transfer layer further includes a primer layer interposed between the surface protection layer and the adhesive layer.
[11] The transfer film according to [10], wherein at least one selected from the surface protection layer, the primer layer, and the adhesive layer includes a weather resistance improver.
[12] The transfer film according to any one of [1] to [11], used for transferring the transfer layer onto at least a part of a surface of an exterior material.
[13] A water- and oil-repellent exterior material including an exterior material and a surface protection film disposed on at least a part of a surface of the exterior material, wherein the surface protection film is the transfer layer included in the transfer film according to any one of [1] to [12], and the surface protection layer included in the transfer layer constitutes at least a part of a surface layer of the water- and oil-repellent exterior material.
[14] The water- and oil-repellent exterior material according to [13], wherein the transfer layer includes an adhesive layer, or the water- and oil-repellent exterior material includes an adhesive layer interposed between the transfer layer and the exterior material.
[15] A method for producing a water- and oil-repellent exterior material, the method including preparing the transfer film according to any one of [1] to [12] and an exterior material; arranging the transfer film on the exterior material such that the transfer layer included in the transfer film faces the exterior material; and removing the release film included in the transfer film.

### EXAMPLES

The transfer film according to the present disclosure is described below on the basis of Examples below. It should be noted that the transfer film according to the present disclosure is not limited by Examples. Hereinafter, "part by mass" is referred to simply as "part".

### [Example 1]

A silicone-coated release film (a silicone-coated PET film) with a surface having a surface free energy of 19.8 mJ/m², the silicone-coated release film having a thickness of 50 µm, was prepared as a release film. The surface protection layer-forming curable resin composition described below was applied onto the above surface of the release film, and the resulting coating film was dried to form an uncured resin layer. The uncured resin layer was irradiated with an electron beam at 90 kV and 7 Mrad (70 kGy) in order to cure the resin layer by crosslinking. Hereby, a surface protection layer having a thickness of 3 µm was formed. After the surface of the surface protection layer has been subjected to a corona discharge treatment, the primer layer-forming resin composition described below was applied to the surface protection layer. The resulting coating film was dried to form a primer layer having a thickness of 3 µm. A thermal bonding resin (an acrylic resin) was applied to the primer layer to form an adhesive layer having a thickness of 4 µm. A transfer film was prepared in the above-described manner. The transfer film included a silicone-coated PET film serving as a release film and a transfer layer disposed on the PET film. The transfer layer included a surface protection layer, a primer layer, and an adhesive layer.

Hereinafter, the chemical composition of a resin composition is described in terms of solid content. When a resin composition was used for coating, the resin composition was diluted with ethyl acetate such that the solid concentration was adjusted to about 60% by mass.

### <Surface Protection Layer-Forming Curable Resin Composition>

| | |
|---|---|
| • Trifunctional urethane (meth)acrylate | 100 parts |
| • Ultraviolet absorber | 2 parts |

(Tinuvin 479 (product name), 2-(2-hydroxy-4-[1-octyloxycarbonylethoxy]phenyl)-4,6-bis(4-phenylphenyl)-1,3,5-triazine, produced by BASF SE Japan)

| | |
|---|---|
| • Light stabilizer | 3 parts |

(Sanol LS-3410 (product name), 1,2,2,6,6-pentamethyl-4-piperidinyl methacrylate, produced by Nippon Nyukazai Co., Ltd.)

| | |
|---|---|
| • Reactive polysiloxane | 1 part |

(dimethylpolysiloxane with a number-average molecular weight of 2000, which has acryloyl groups at both terminals, the number of acryloyl groups included in the molecule: 2)

### <Primer Layer-Forming Resin Composition>

| | |
|---|---|
| • Polycarbonate urethane (meth)acrylate copolymer: | 100 parts |

(mass ratio of urethane and (meth)acrylate components included in the polycarbonate urethane acrylate copolymer: 70/30)

| | |
|---|---|
| • Hydroxyphenyltriazine ultraviolet absorber: | 17 parts |

(Tinuvin 400 (product name), 2-[4-[(2-hydroxy-3-dodecyloxypropyl)oxy]-2-hydroxyphenyl]-4,6-bis(2,4-dimethylphenyl)-1,3,5-triazine, produced by BASF SE Japan)

| | |
|---|---|
| • Hydroxyphenyltriazine ultraviolet absorber: | 13 parts |

(Tinuvin 479 (product name), 2-(2-hydroxy-4-[1-octyloxycarbonylethoxy]phenyl)-4,6-bis(4-phenylphenyl)-1,3,5-triazine, produced by BASF SE Japan)

| | |
|---|---|
| • Hindered amine light stabilizer: | 8 parts |

(Tinuvin 123 (product name), bis(1-octyloxy-2,2,6,6-tetramethyl-4-piperidyl) sebacate, produced by BASF SE Japan)

| | |
|---|---|
| • Antiblocking agent: | 9 parts |

(silica particles, average particle size: 3 µm)

| | |
|---|---|
| • Curing agent: | 25 parts |

### (Hexamethylene diisocyanate)

### [Example 2]

A transfer film was prepared as in Example 1, except that the reactive polysiloxane included in the surface protection layer-forming curable resin composition was changed to a dimethylpolysiloxane with a number-average molecular weight of 2000 which had a methacryloyl group at one of the terminals thereof (number of methacryloyl groups: 1).

### [Example 3]

A transfer film was prepared as in Example 1, except that the reactive polysiloxane included in the surface protection layer-forming curable resin composition was changed to a dimethylpolysiloxane with a number-average molecular weight of 3000 which did not have a (meth)acryloyl group.

### [Comparative Example 1]

A transfer film was prepared as in Example 1, except that a PET film having a surface free energy of 48.3 mJ/m² and a thickness of 50 µm was used as a release film and the reactive polysiloxane was not added to the surface protection layer-forming curable resin composition.

### [Comparative Example 2]

A transfer film was prepared as in Example 1, except that a PET film having a surface free energy of 48.3 mJ/m² and a thickness of 50 µm was used as a release film.

### [Transfer]

The transfer films prepared in Examples and Comparative Examples and polycarbonate boards having a thickness of 2 mm, which were used as target materials, were prepared. Each of the transfer films was bonded to one of the surfaces of a corresponding one of the polycarbonate boards such that the adhesive layer of the transfer film came into contact with the polycarbonate board while being heated at 160°C. Hereby, a molded body with a release film, which included a polycarbonate board, an adhesive layer, a primer layer, a surface protection layer, and a release film arranged in this order, was prepared. Subsequently, the release film was removed from the transfer layer of the transfer film. Hereby, a specimen was prepared. The surface protection layer constituted one of the surface layers of the specimen.

### [Weathering Test]

A weathering test was conducted in accordance with the description in <Weathering Test> above using the following device.
Device name: tester "Metal Weather" (produced by DAIPLA WINTES Co., Ltd.)
Model: KW-R7TP-A
Light source lamp: Metal halide lamp "MW-60W 232L"
Filter: KF-1 filter (295 to 780 nm)
Cooling method : Water cooling jacket method

### [Measurement of Content of Silicon Atoms (Si Atom Content)]

The content of silicon atoms in the surface of the surface protection layer of the specimen was determined by X-ray photoelectron spectroscopy (XPS) using the device and analysis method described below under the following measurement conditions.
Device: PHI 5000 VersaProbe III
(produced by ULVAC-PHI, Inc., scanning X-ray photoelectron spectroscopy)
Analysis method: Narrow analysis
Measurement conditions:
   X-ray source: Al-Kα radiation (1.49 keV)
   X-ray irradiation diameter: 200 µm
   X-ray power: 50 W (acceleration voltage: 15 kV,
      emission current: 3.3 mA)
   Photoelectron incident angle: 45°
   Measurement region: 600 µm × 200 µm

### [Measurement of Surface Free Energy (Surface Free E)]

The contact angles of diiodomethane (i.e., dispersive part) and pure water (i.e., polar part) on the surface of the surface protection layer of the specimen were measured using a contact angle meter (product name: "DMo-702" produced by Kyowa Interface Science Co., Ltd.) in accordance with a sessile drop method conforming to JIS R 3257:1999 under the following conditions: temperature: 25°C, relative humidity: 50%, droplet amount: 2.0 µL. In the measurement of contact angle, the static contact angle of a droplet was measured with the contact angle meter in accordance with a half-angle method after 1 second since the landing of the droplet. On the basis of the above contact angles, the surface free energy values of the dispersive and polar parts were determined. The surface free energy (mJ/m²) of the surface of the surface protection layer was calculated on the basis of the sum total of the surface free energy values using the formula of the Wu's method. The above measurement was conducted five times, and the average thereof was considered the surface free energy. Note that the above surface free energy values were determined using surface free energy analysis software (product name: "FAMAS" produced by Kyowa Interface Science Co., Ltd.).

### [Measurement of Water Contact Angle]

The water contact angle on the surface of the surface protection layer of the specimen was determined in accordance with a sessile drop method confirming to JIS R 3257:1999. Specifically, a water droplet of 2.0 µL was dropped onto the surface of the surface protection layer of the specimen, and the static contact angle of the droplet was measured with a contact angle meter (product name: "DMo-702" produced by Kyowa Interface Science Co., Ltd.) in accordance with a half-angle method after 1 second since the landing of the droplet. The above measurement was conducted five times, and the average thereof was considered the contact angle. The measurement of contact angle was conducted in an atmosphere having a temperature of 25°C and a relative humidity of 50%. The water contact angle was measured after the specimen had been left to stand in the above atmosphere for 10 minutes or more.

### [Test of Wiping Ink of Felt-Tipped Pen]

A straight line having a length of 5 cm was drawn on the surface of the surface protection layer of the specimen with an oil-based, black felt-tipped pen ("Mckee Extra Fine" produced by ZEBRA Co., Ltd.). The specimen on which the straight line had been drawn was left to stand for 10 seconds and, subsequently, a cellulose nonwoven fabric wiper ("BEMCOT M-3II" produced by Asahi Kasei Corporation) was reciprocated on the surface on which the straight line was drawn 20 times in order to wipe off the straight line. The number of times the wiper was reciprocated and the state of removal by wiping were evaluated in accordance with the following standard.
· AA: The straight line was removed after the wiper had been reciprocated 10 times or less.
· BB: The straight line was removed after the wiper had been reciprocated 11 times or more and 15 times or less.
· CC: The straight line was removed after the wiper had been reciprocated 16 times or more and 20 times or less.
· DD: The straight line could not be removed after the wiper had been reciprocated 20 times.

### [Table 1]

As will be understood by those skilled in the art, the transfer film, etc. according to the present disclosure are not limited by the description of Examples above. It should be understood that Examples above and the description are merely intended to describe the principle of the present disclosure. Various modifications and improvements may be done without departing from the summary and scope of the present disclosure. The modifications and improvements are included within the claimed scope of the present disclosure. Furthermore, the claimed scope of the present disclosure includes not only the claims but also equivalents thereof.

### Reference Signs List

- 1: transfer film
- 2: water- and oil-repellent exterior material
- 10: release film
- 20: transfer layer
- 22: surface protection layer
- 23: primer layer
- 24: adhesive layer
- 30: exterior material (target material)

## Claims

1. A transfer film for exterior materials, the transfer film comprising a release film and a transfer layer,
the transfer layer including a surface protection layer,
the surface protection layer constituting a surface layer of the transfer layer, the surface layer facing the release film,
wherein a content of silicon atoms in a surface of the surface protection layer, the surface facing the release film, the content being determined by X-ray photoelectron spectroscopy, is 3 atomic% or more and 30 atomic% or less.

2. The transfer film according to claim 1, wherein a content of silicon atoms in a surface of a specimen prepared by transferring the transfer layer to a target material, the specimen having been subjected to a weathering test under conditions below, the surface in which the surface protection layer is located, the content being determined by X-ray photoelectron spectroscopy, is 2.5 atomic% or more and 30 atomic% or less.
<Weathering Test>
The surface protection layer of the specimen is irradiated with ultraviolet radiation for 20 hours under irradiation conditions below using a tester "Metal Weather" equipped with a metal halide lamp. Subsequently, water is sprayed on the specimen for 30 seconds. Then, condensation is caused for 4 hours under condensation condition below. The above steps are considered one cycle and repeated for 12.5 cycles.
«Irradiation Conditions»
Illuminance: 100 mW/cm²,
Black panel temperature: 63°C, Humidity: 50%RH
<<Condensation Condition»
Humidity: 98%RH

3. A transfer film for exterior materials, the transfer film comprising a release film and a transfer layer,
the transfer layer including a surface protection layer,
the surface protection layer constituting a surface layer of the transfer layer, the surface layer facing the release film,
wherein a surface free energy of a surface of the surface protection layer, the surface facing the release film, is 20 mJ/m² or more and 40 mJ/m² or less.

4. The transfer film according to claim 3, wherein a surface free energy of a surface of a specimen prepared by transferring the transfer layer to a target material, the specimen having been subjected to a weathering test under the conditions, the surface in which the surface protection layer is located, is 20 mJ/m² or more and 40 mJ/m² or less.

5. A transfer film for exterior materials, the transfer film comprising a release film and a transfer layer,
the transfer layer including a surface protection layer,
the surface protection layer constituting a surface layer of the transfer layer, the surface layer facing the release film,
wherein a water contact angle of a surface of the surface protection layer, the surface facing the release film, is 90° or more.

6. The transfer film according to claim 5, wherein a water contact angle of a surface of a specimen prepared by transferring the transfer layer to a target material, the specimen having been subjected to a weathering test under the conditions, the surface in which the surface protection layer is located, is 85° or more.

7. The transfer film according to any one of claims 1 to 6, wherein a surface free energy of a surface of the release film, the surface facing the transfer layer, is 15 mJ/m² or more and 35 mJ/m² or less.

8. The transfer film according to any one of claims 1 to 7, wherein the release film is in contact with the surface protection layer of the transfer layer.

9. The transfer film according to any one of claims 1 to 8, wherein the transfer layer further includes an adhesive layer.

10. The transfer film according to claim 9, wherein the transfer layer further includes a primer layer interposed between the surface protection layer and the adhesive layer.

11. The transfer film according to claim 10, wherein at least one selected from the surface protection layer, the primer layer, and the adhesive layer includes a weather resistance improver.

12. The transfer film according to any one of claims 1 to 11, used for transferring the transfer layer onto at least a part of a surface of an exterior material.

13. A water- and oil-repellent exterior material comprising an exterior material and a surface protection film disposed on at least a part of a surface of the exterior material,
wherein the surface protection film is the transfer layer included in the transfer film according to any one of claims 1 to 12, and the surface protection layer included in the transfer layer constitutes at least a part of a surface layer of the water- and oil-repellent exterior material.

14. The water- and oil-repellent exterior material according to claim 13,
wherein the transfer layer includes an adhesive layer, or
the water- and oil-repellent exterior material includes an adhesive layer interposed between the transfer layer and the exterior material.

15. A method for producing a water- and oil-repellent exterior material, the method comprising:
preparing the transfer film according to any one of claims 1 to 12 and an exterior material;
arranging the transfer film on the exterior material such that the transfer layer included in the transfer film faces the exterior material; and
removing the release film included in the transfer film.
